Europäisches Patentamt

European Patent Office

Office européen des brevets

(11) Numéro de publication: **0 085 603**

**A1**

## (12) DEMANDE DE BREVET EUROPEEN

(21) Numéro de dépôt: 83400150.5

(51) Int. Cl.³: **G 05 B 19/42**

(22) Date de dépôt: 21.01.83

(30) Priorité: 22.01.82 DE 3201851

(43) Date de publication de la demande:
10.08.83 Bulletin 83/32

(84) Etats contractants désignés:
BE CH DE FR GB IT LI LU NL SE

(71) Demandeur: SAINT-GOBAIN VITRAGE
Les Miroirs 18, avenue d'Alsace
F-92400 Courbevoie(FR)

(72) Inventeur: Reinmold, Heinz Josef
Schervierstrasse 6
Aachen(DE)

(72) Inventeur: Mucha, Horst
Severinstrasse 22
Aachen(DE)

(74) Mandataire: Leconte, Jean-Gérard et al,
Saint-Gobain Recherche 39, Quai Lucien Lefranc
F-93304 Aubervilliers Cedex(FR)

(54) Procédé et dispositif pour programmer une machine de traitement à chariot mobile suivant deux directions.

(57) L'invention concerne la détermination et l'enregistrement du programme de trajet selon un contour (1) d'une machine ayant un chariot (6) mobile suivant deux directions orthogonales X et Y.

Selon l'invention, à l'aide d'un indicateur d'ange (24) fixé sur une tête de palpage (8), on mesure la variation dans le temps de la position angulaire du contour (1) et on introduit dans un calculateur (28) les signaux (25) analogigues ou numériques reproduisant la variation de position angulaire, ainsi que les signaux (33, 34) provenant de générateurs d'impulsions (30, 31) qui traduisent l'emplacement de la tête de palpage (8) dans un repère X, Y, le calculateur déterminant à partir de ces signaux le rayon des arcs de cercle, les coordonées des centres des arcs de cercle et les angles des secteurs de cercle appartenant au contour.

L'invention s'applique au pilotage de machines, notamment de traitement de feuilles de verre.

Fig. 2

Croydon Printing Company Ltd.

EP 0 085 603 A1

PROCEDE ET DISPOSITIF POUR PROGRAMMER

UNE MACHINE DE TRAITEMENT A CHARIOT MOBILE SUIVANT DEUX DIRECTIONS

L'invention concerne la détermination et le stockage du programme de trajet d'une machine à commande numérique ayant un chariot portant un outil de travail d'un objet, ledit chariot étant entraîné par des moteurs suivant deux directions orthogonales X et Y pour maintenir l'outil de travail en contact avec l'objet et ayant un palpeur articulé sur sa partie avant assujetti à suivre le contour de l'objet, relevant des informations sur le contour de l'objet nécessaires après traitement et mise en mémoire pour la commande des moteurs.

Il est connu par le document DE-OS 26 46 053 pour des machines de ce type, d'utiliser une bande magnétique sur laquelle sont mises en mémoire les impulsions caractéristiques du trajet ; elles commandent l'avancement pas à pas, suivant chacune des directions X et Y, des moteurs du chariot portant l'outil de travail.

Le document DE-OS 16 38 029 enseigne de transposer en valeurs de coordonnées pour les deux directions de déplacement, les signaux fournis par les générateurs d'impulsions associés aux système de palpage, ces valeurs de coordonnées étant introduites dans un calculateur qui produit une bande perforée qui sert à piloter la machine de traitement à commande numérique.

Jusqu'à maintenant, on ne peut pas établir simplement un programme de trajet en un langage de programmation pour lequel le contour à parcourir soit divisé en lignes droites et en lignes courbes déterminées mathématiquement et pour lequel, en dehors des points mêmes du trajet à programmer, les rayons de courbure, les coordonnées des centres des portions de cercle du trajet, ainsi que les angles soient détectés et enregistrés par exemple sur une bande perforée.

Une telle commande de machine est par exemple la commande CNC-FANUC connue, mais sa programmation est compliquée.

L'invention a pour but de procurer un procédé du type spécifié qui permette d'établir automatiquement, donc sans difficulté, le programme de trajet pour une machine de traitement dont le pilotage du trajet est basé sur un programme qui détecte le contour à parcourir sous la forme de segments de lignes droites et de segments de cercles déterminés mathématiquement.

Selon l'invention, à l'aide d'un indicateur d'angle, on mesure la variation dans le temps de la position angulaire du contour et on introduit dans un calculateur les signaux analogiques ou numériques reproduisant la variation de la position angulaire ainsi déterminée ainsi que les signaux provenant des générateurs d'impulsions et traduisant l'emplacement de la tête de palpage dans le système de coordonnées X, Y, le calculateur déterminant à partir de ces signaux le rayon des arcs de cercle, les coordonnées des centres des arcs de cercle et les angles des secteurs de cercle.

Selon l'invention, un dispositif permettant de mettre en oeuvre le procédé défini précédemment, et comportant une tête de palpage est montée sur un chariot à double mouvement composé suivant deux directions X, Y pourvu de générateurs d'impulsions de rotation pour la direction X et la direction Y, et un calculateur pour la préparation des signaux provenant des générateurs d'impulsions de rotation, est tel que la tête de palpage est pourvue d'un indicateur d'angle pouvant tourner autour d'un axe passant par le point de palpage sur le contour préétabli et de moyens qui orientent l'indicateur d'angle dans la direction des parties droites ou dans la direction des tangentes aux arcs de cercle du contour, les signaux de cet indicateur d'angle étant également introduits dans le calculateur.

Suivant une première forme d'exécution, la tête de palpage peut elle-même être montée à rotation et peut être pourvue de deux galets palpeurs qui s'appliquent contre le contour extérieur d'un modèle en forme de plaque et qui font s'orienter la tête de palpage dans la direction correspondant au segment de contour palpé. L'indicateur d'angle est, dans ce cas, couplé mécaniquement à la tête de palpage orientable. Dans cette forme d'exécution, il faut que les deux galets palpeurs soient toujours pressés contre le contour du modèle en forme de plaque ou le gabarit. Ceci peut-être obtenu, par exemple, à l'aide de galets palpeurs aimantés de façon permanente et d'un modèle en forme de plaque ou d'un gabarit en une matière ferromagnétique.

Suivant une autre forme d'exécution de l'invention, la tête de palpage est montée orientable et elle est couplée mécaniquement à à l'indicateur d'angle ; elle est pourvue d'au moins deux palpeurs optiques et d'un moteur commandé par ces palpeurs optiques. Ce moteur oriente de façon continue la tête de palpage sur chaque arc de cercle. Une telle tête de palpage à commande optique ou photoélectrique permet de palper des modèles tracés sur un document par exemple sur un support en papier ce qui est, bien entendu, particulièrement avantageux.

La rotation de l'indicateur d'angle peut être par le fait que son rotor est couplé à une roue qui tourne sur le modèle et qui lors du parcours du contour fait tourner le rotor de l'indicateur d'angle toujours dans le sens correspondant à la direction du déplacement de la tête de palpage.

L'invention sera expliquée ci-après plus en détail avec référence aux dessins annexés dans lesquels :

- la figure 1 illustre un modèle à programmer ayant la forme d'un pare-brise ainsi que les données nécessaires pour une commande de machine CNC courante dans un système de coordonnées X, Y

- la figure 2 illustre une première forme d'exécution d'une machine à programmer conforme à l'invention comportant un dispositif de suivi d'une courbe et une tête de palpage optique tournante ainsi qu'un indicateur d'angle pas à pas numérique

- la figure 3 illustre le dispositif de commande de suivi de courbe et le dispositif de commande pour la rotation de la tête de palpage

- la figure 4 est une vue d'une autre forme d'exécution d'une machine à programmer conforme à l'invention comportant un dispositif de suivi d'une courbe, une tête de palpage optique tournante et un générateur tachymétrique indicateur d'angle

- la figure 5 montre un dispositif de suivi d'une courbe et la commande de la rotation de la tête de palpage pour le dispositif représenté sur la figure 4

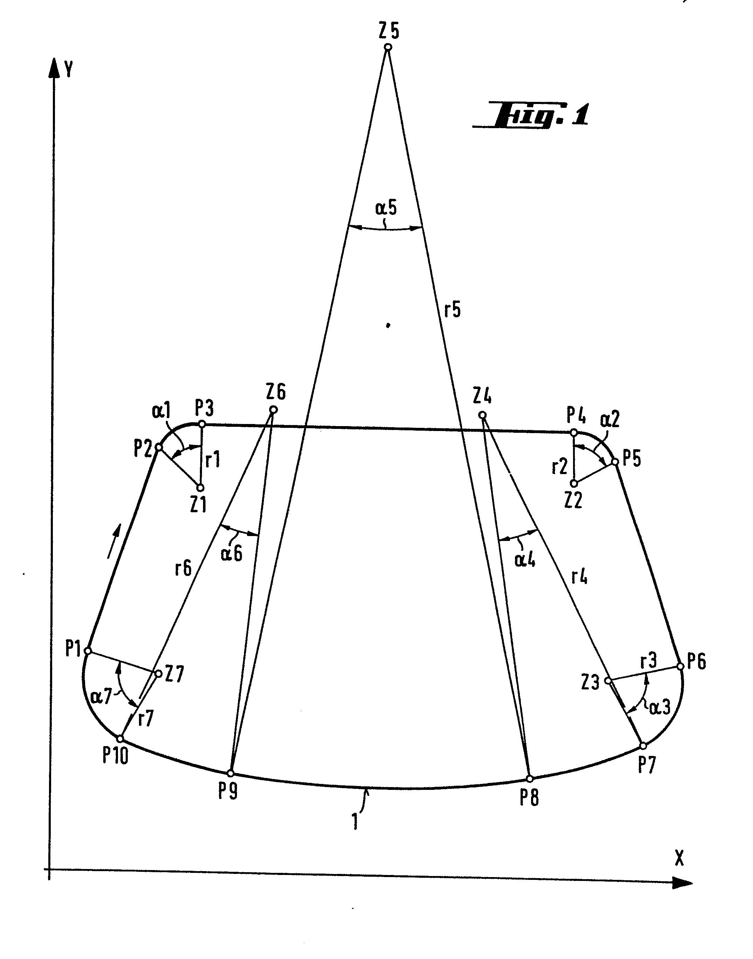

La figure 1 montre le contour 1 fermé sur lui-même, d'un pare-brise qui est figuré, par exemple par un dessin au trait sur un support adéquat, en grandeur nature. Pour établir le programme à partir de ce contour 1 en substance sur une bande perforée, pour une machine à meuler ou à découper à commande CNC, il faut que le contour 1 soit divisé en des parties droites et en des arcs de cercle déterminés mathématiquement. Par exemple, en partant d'un point P1, les coordonnées de ce point P1 sont tout d'abord déterminées dans le système de coordonnées X, Y et la position angulaire de la partie droite allant jusqu'au point suivant P2 est également déterminée. La portion de contour comprise entre les points P2 et P3 est un arc de cercle défini par les coordonnées du point P2, par le rayon de courbure $r1$, par les coordonnées du centre de l'arc de cercle Z1 et par l'angle $\alpha 1$ (alpha 1) du secteur de cercle limité par les points P2 et P3. Au point 3 débute à nouveau une portion droite jusqu'au point P4 où le contour 1 devient à nouveau un arc de cercle. Cette portion en arc de cercle débutant au point P4 est définie par les coordonnées du point P4, le rayon $r2$, les coordonnées du centre du cercle Z2 et l'angle $\alpha 2$ (alpha 2) du secteur de cercle entre P4 et P5. Au point P4 se raccorde à nouveau une portion droite du contour 1 qui va jusqu'au point P6. Au point P6 débute à nouveau un arc de cercle qui va jusqu'au point P7 et qui est déterminé par les coordonnées du point P6, par le rayon $r3$, par les coordonnées du centre du cercle Z3 et par l'angle $\alpha 3$ (alpha 3). Au point P7 débute un autre arc de cercle ayant un rayon $r4$, un centre Z4 et un angle de secteur de cercle $\alpha 4$ (alpha 4). Cet arc de cercle se raccorde au point P8 à un autre arc de cercle d'un rayon $r5$ relativement grand, qui est déterminé, en outre, par les coordonnées du centre du cercle Z5 et par l'angle du secteur de cercle $\alpha 5$ (alpha 5). L'arc de cercle qui s'y raccorde est défini par les coordonnées du point P9, par le rayon de courbure $r6$, par les coordonnées du centre du cercle Z6 et par l'angle du secteur de cercle $\alpha 6$ (alpha 6). La dernière partie du contour 1 comprise entre les points P10 et P1 est à nouveau déterminée par les coordonnées de P10, le rayon de courbure $r7$, les coordonnées du centre du cercle Z7 et l'angle du secteur de cercle $\alpha 7$ (alpha 7).

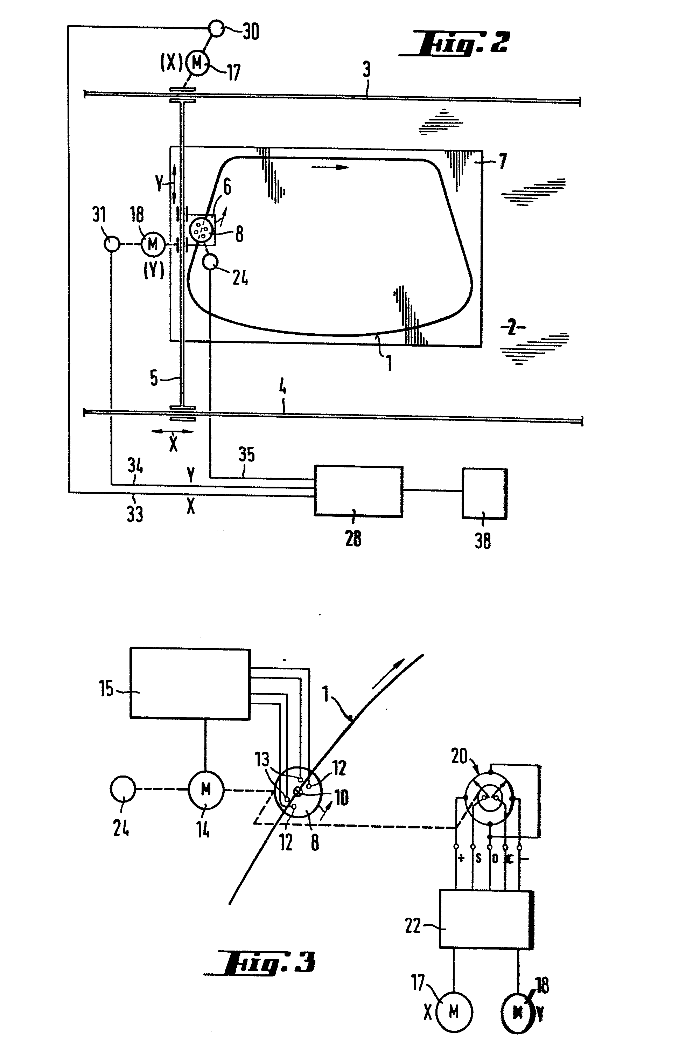

Le dispositif programmateur, tel que représenté schématiquement sur la figure 2, comporte une table 2, des rails 3, 4 disposés sur les deux longs côtés de cette table 2, un pont 5 pouvant être déplacé le long des rails 3, 4 dans la direction X et un chariot 6, qui est mobile le long du pont 5 dans la direction Y. Sur la table 2 se trouve une feuille de papier à dessin 7 sur laquelle le contour 1 à programmer est reporté selon un rapport de 1:2 sous la forme d'un dessin au trait.

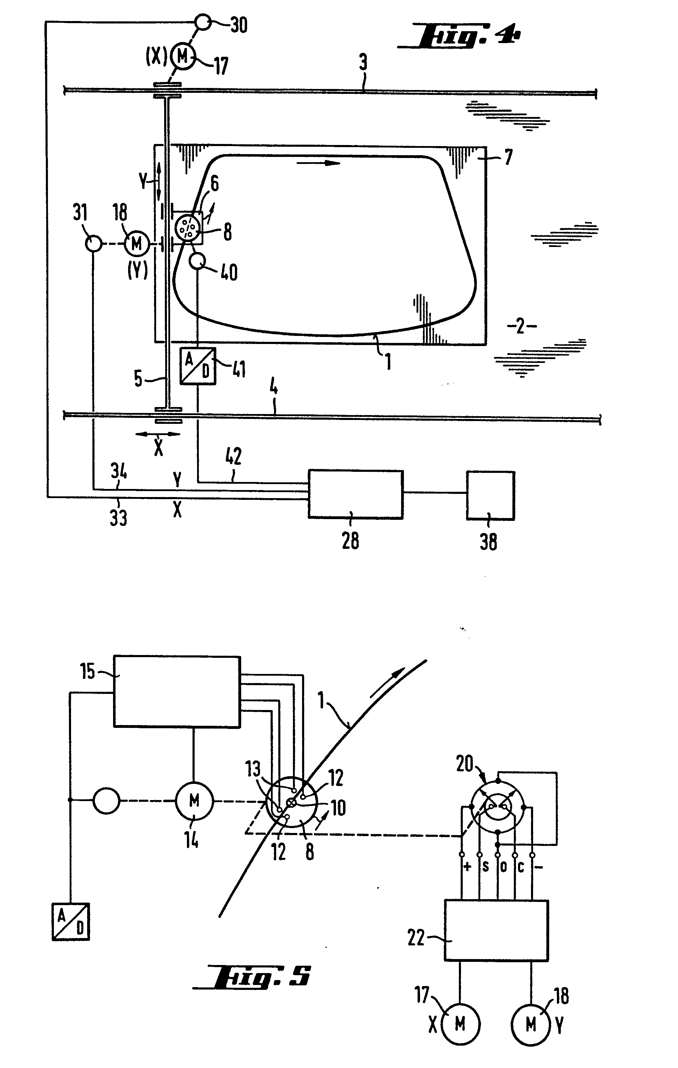

Un tête de palpage 8 pouvant tourner autour d'un axe perpendiculaire au plan de la table 2 est montée sur le chariot 6. Cette tête de palpage 8 est une tête optique comportant une source de lumière 10 disposée au centre et deux groupes de cellules photo-électriques 12, 13 (figure 3) qui sont disposés symétriquement de part et d'autre de la source de lumière. La tête de palpage 8 est entraînée en rotation par un moteur 14 de telle sorte que, pendant que le chariot 6 se déplace le long du contour 1, le trait de dessin du contour 1 reste toujours au milieu des cellules photo-électriques 12 et 13. Un dispositif de commande et d'amplification électronique 15 servant à commander le moteur orientateur de tête 14 est activé par les quatre cellules photo-électriques 12, 13.

Le chariot 6 est guidé le long du contour 1 par un dispositif automatique de suivi d'une courbe au moyen d'un moteur d'entraînement 17 faisant se déplacer le pont 5 suivant la direction X sur les rails 3 et 4 et d'un moteur d'entraînement 18 faisant se déplacer le chariot 6 sur le pont 5 dans la direction Y. La commande des moteurs d'entraînement 17 et 18 s'effectue grâce à un générateur de fonctions sinus-cosinus 20 couplé mécaniquement à la tête de palpage tournante 8, qui détermine, en fonction de la position angulaire de la tête de palpage, pour une vitesse d'avancement résultante constante du chariot 6, le rapport de vitesse des deux moteurs d'entraînement 17 et 18 ainsi que la direction du déplacement du chariot 6. Un servo-amplificateur 22, pour les deux axes, est activé par le générateur de fonctions sinus-cosinus 20 et met en mouvement pour sa part, les moteurs d'entraînement 17 et 18. Un dispositif de suivi d'une courbe de ce type est connu comme tel et est commercialisé, par exemple, sous le nom de "FOTOELEKTRISCHE STEUERUNG PH 19" par la société MESSER-GRIESHEIM GmbH.

Un indicateur d'angle 24 est couplé mécaniquement au moteur orientateur de tête 14 ou directement à la tête de palpage tournante 8. A cet effet, on peut, par exemple, utiliser l'indicateur d'angle du type LG 500 de la société GELMA. Pour une vitesse constante d'avancement du palpeur, la vitesse de rotation de la tête de palpage 8, ainsi que celle de l'indicateur d'angle 24, lors du parcours d'une portion en arc de cercle du contour 1, est inversement proportionnelle au rayon de l'arc de cercle. Lors de l'utilisation d'un indicateur d'angle pas à pas numérique 24, la fréquence des impulsions de l'indicateur 24 est donc aussi inversement proportionnelle au rayon de la portion en arc de cercle du contour 1 qui est parcouru. Le rayon de l'arc de cercle peut, par conséquent, être déterminé numériquement à partir de la fréquence des impulsions, dans un calculateur 28 situé en aval.

Le nombre des impulsions numériques donné par l'indicateur d'angle 24 pendant la rotation défini l'angle $\alpha$ (alpha) du secteur de cercle de sorte que la valeur de l'angle $\alpha$ (alpha) peut aussi être obtenue pendant le parcours d'un arc de cercle, directement à partir des signaux de l'indicateur d'angle 24, et introduite dans le calculateur 28.

Les coordonnées des autres points importants, à savoir les points P, qui sont à la jonction des parties rectilignes et des parties en arc de cercle, ou à la jonction de deux parties en arc de cercle ayant des rayons différents, également les points Z qui sont les centres des arcs de cercle, sont déterminées par le générateur d'impulsions de rotation 30 pour l'axe X et par le générateur d'impulsion de rotation 31 pour l'axe Y en liaison avec le calculateur 28. Les signaux provenant des généraeurs d'impulsions de rotation 30, 31 sont fournis au calculateur par l'intermédiaire des lignes 33, 34 et ceux qui proviennent de l'indicateur d'angle 24 sont fournis au calculateur 28 par l'intermédiaire de la ligne 35. Le calculateur 28 détermine à partir de ces signaux les données numériques, à partir desquelles le programme sur bande perforée peut être préparé directement dans une perforatrice de bande perforée 38.

Le dispositif programmateur représenté sur les figures 4 et 5 correspond, dans sa structure mécanique et en ce qui concerne son suivi automatique d'une courbe grâce à des moteurs d'entraînement 17 et 18, au dispositif décrit à propos des figures 2 et 3, de sorte que l'on peut se référer à la description faite en relation avec ces figures 2 et 3. Cependant, dans ce cas, l'indicateur d'angle utilisé pour déterminer la position angulaire de la tête de palpage tournante 8 est un générateur tachymétrique 40 couplé mécaniquement à la tête de palpage tournante 8. Le générateur tachymétrique 40 fournit une tension proportionnelle à la vitesse de rotation, qui est convertie en impulsions numériques dans le convertisseur analogique-numérique 41 ; ces impulsions étant fournies telles quelles au calculateur 28 par l'intermédiaire de la ligne 42. Dans ce cas également, le rayon r de la portion de contour

- 7 - 0085603

en arc de cercle palpée est inversement proportionnel à la vitesse de rotation du générateur tachymétrique 40 et ainsi à la tension fournie par ledit générateur tachymétrique. Les points P, c'est-à-dire les points où les portions droites de contour sont jointes à un arc de cercle ou inversement, ou où des arcs de cercle sont joints à un autre arc de cercle de rayon différent, sont identifiés par le fait qu'en ces points, la tension provenant de la machine tachymétrique varie ; une variation de fréquence apparaît donc également à la sortie du convertisseur analogique-numérique 41. De plus, l'intervalle de temps pendant lequel une tension constante est fournie par le générateur tachymétrique 40 est une mesure de l'angle $\alpha$ (alpha) du secteur de cercle, et son exploitation dans le calculateur 28 peut-être effectuée de la même manière que dans le dispositif décrit plus haut.

Le chariot 6 de la machine peut porter notamment un outil de découpe, par exemple d'une feuille de verre, une meule pour meuler les bords de la feuille de verre ou encore un moyen de déposer un décor ou une bande conductrice sur la portion de la surface de la feuille de verre proche des bords.

R E V E N D I C A T I O N S

1. Procédé pour déterminer et enregistrer le programme de trajet le long du contour d'un modèle en deux dimensions, d'une machine à commande numérique ayant un chariot à double mouvement, dans lequel une tête de palpage montée sur le chariot pourvu de générateurs d'impulsions de rotation pour chacune des deux directions X et Y, est guidée le long du contour du modèle, les signaux des générateurs d'impulsions donnant les coordonnées en X et Y des points du contour étant introduits le cas échéant après un traitement approprié, dans un dispositif de stockage de programme, caractérisé en ce qu'en utilisant un indicateur d'angle on mesure la variation dans le temps de la position angulaire du contour et on introduit dans un calculateur les signaux analogiques ou numériques reproduisant la variation de la position angulaire ainsi déterminée ainsi que les signaux provenant des générateurs d'impulsions de rotation et traduisant l'emplacement de la tête de palpage dans le système de coordonnées X, Y, le calculateur déterminant à partir de ces signaux le rayon des portions de contour en arc de cercle, les coordonnées des centres des arcs de cercle et les angles des secteurs de cercle.

2. Dispositif pour mettre en oeuvre le procédé suivant la revendication 1, comportant une tête de palpage qui est montée sur un chariot à double mouvement suivant deux direction X et Y pourvu de générateurs d'impulsions pour la direction X et la direction Y, et un calculateur de préparation des signaux provenant des générateurs d'impulsions de rotation, caractérisé en ce que la tête de palpage est pourvue d'un indicateur d'angle pouvant tourner autour d'un axe passant par le point de palpage du contour préétabli et de moyens qui orientent l'indicateur d'angle dans la direction des parties droites ou dans la direction des tangentes aux arcs de cercle du contour préétabli, les signaux de l'indicateur d'angle étant également introduits dans le calculateur.

3. Dispositif suivant la revendication 2, caractérisé en ce que la tête de palpage est elle-même montée à rotation et est pourvue de deux galets palpeurs palpant le contour extérieur d'un modèle plat.

4. Dispositif suivant la revendication 2, caractérisé en ce que la tête de palpage est elle-même montée à rotation et est pourvue d'au moins deux palpeurs optiques destinés à palper un dessin au trait ainsi que d'un moteur commandé par les palpeurs optiques, ce moteur orientant la tête de palpage sur la position angulaire du segment de contour.

5. Dispositif suivant la revendication 2, caractérisé en ce que le rotor de l'indicateur d'angle tourne dans le sens correspondant au sens de déplacement de la tête de palpage grâce à une roue d'entraînement qui roule sur le modèle.

6. Dispositif suivant l'une quelconque des revendications 2 à 5, caractérisé en ce que l'indicateur d'angle est un indicateur d'angle pas à pas numérique, de marche avant - arrière.

7. Dispositif suivant l'une quelconque des revendications 2 à 5, caractérisé en ce que l'indicateur d'angle est un générateur tachymétrique.

8. Dispositif suivant l'une quelconque des revendications 2 à 7, caractérisé en ce que la tête de palpage est déplacée le long du contour à palper à une vitesse d'avancement constante.

9. Application à la détermination et à l'enregistrement d'un programme pour une machine de traitement du verre notamment machine de découpe, de meulage, de dépôt de bandes décoratives ou conductrices.

Fig. 1

0085603

*Fig. 2*

*Fig. 3*

0085603

*Fig. 4*

*Fig. 5*

Office européen
des brevets

**RAPPORT DE RECHERCHE EUROPEENNE**

0085603
Numéro de la demande

EP    83  40  0150

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| A | DE-A-1 638 139  (SIEMENS) <br> *Page 2, lignes 4-13* | 1 | G 05 B   19/42 |
| | --- | | |
| A | FR-A-2 399 056  (SOCIETE D'APPLICATIONS GENERALES D'ELECTRICITE ET DE MECANIQUE SAGEM) <br> *Figures 1-3; revendication 1* | 1 | |
| | --- | | |
| A | EP-A-0 032 867  (SAINT-GOBAIN VITRAGE) | | |
| | --- | | |
| D,A | FR-A-2 368 074  (SAINT-GOBAIN INDUSTRIES) | | |
| | ----- | | |

DOMAINES TECHNIQUES
RECHERCHES (Int. Cl. ³)

G 05 B
B 23 Q

Le présent rapport de recherche a été établi pour toutes les revendications

| Lieu de la recherche <br> LA HAYE | Date d'achèvement de la recherche <br> 29-04-1983 | Examinateur <br> KOLBE W.H. |
|---|---|---|

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

&  : membre de la même famille, document correspondant

OEB Form 1503. 03.82